# EUROPEAN PATENT SPECIFICATION

(11) **EP 2 388 486 B1**
(45) Date of publication and mention of the grant of the patent: **04.07.2018**
(21) Application number: 11167009.7
(22) Date of filing: 20.05.2011
(51) Int. Cl.: F16B 21/18

(54) **External retainer clip retainer**
Externe Haltecliphalterung
Pièce de retenue externe de clip de retenue

(30) Priority: 20.05.2010 US 783678
(43) Date of publication of application: 23.11.2011
(73) Proprietor: Hamilton Sundstrand Corporation, Windsor Locks, CT 06096-1010 (US)
(72) Inventor: Ainslie, Walter Ernest, Ramona, CA 92065 (US); Adair, David Ronald, Valley Center, CA 92082 (US)
(74) Representative: Dehns

(56) References cited:
- EP-A1- 2 071 200
- US-A- 1 488 450
- US-A- 3 289 726
- US-A- 4 087 071
- US-A1- 2005 135 896

## Description

### BACKGROUND

This disclosure generally relates to retainer clips that fit onto a shaft to limit movement. More particularly, this disclosure relates to a retainer for maintaining clip attachment to a shaft.

A retainer clip may be utilized to maintain and/or limit an axial position of a shaft. The clips extend radially outward from the shaft to engage abutments that thereby constrain axial movement of the shaft. A retainer clip can include an open side to allow assembly from one side into a groove on the shaft. Such clips are biased inwardly to retain the ring within the groove. Axial movement of the clip is prevented by placement within the groove of the shaft. Disassembly of the clip requires pressing radially from the open side of the clip to spread opposing sides apart to slide away from the shaft. Both purposeful and errant contact with the open side of the clip can result in the clip becoming dislodged from the shaft.

US 4087071 discloses a shaft retention assembly and a method according to the preambles of claims 1 and 5, in particular a limit stop comprising a resiliently deformed split ring washer and a separate retainer for restraining the washer against deformation.

US 2005/0135896 discloses an attachment device comprising a push nut within a housing, the housing being secured to a substrate, and the push nut receiving a threaded stud.

### SUMMARY

A disclosed example retention assembly includes a retainer that attaches to a clip that snaps onto a shaft. The example retainer includes a back plate with an opening for the shaft. The retainer prevents errant loosening or dislodgment of the clip from the shaft.

In one aspect the invention provides a shaft retention assembly comprising: a clip having an open end and opposing arms for engaging a shaft; a retainer including a fastening structure configured to secure the retainer to the clip and to prevent errant loosening or dislodgement of the clip from a shaft, wherein: the retainer comprises a back plate including an opening for the shaft and the fastening structure extends from the back plate, the back plate comprises an outer perimeter larger than an outer perimeter of the clip, the fastening structure comprises a wall surrounding the outer perimeter of the clip, and the wall extending past the clip and including an additional length beyond the clip, characterised by the additional length being formable radially inward to form a flange to secure to the clip, the flange providing a non-tampering function.

In another aspect, the invention provides a method of securing a clip to a shaft comprising the steps of: assembling a retainer onto an outer diameter of the shaft; assembling the clip having an open end into a groove on an outer surface of the shaft; and securing the retainer to the clip such that an outer surface of the retainer shields the open end of the clip from contact transverse to an axis of the shaft and such that the retainer prevents errant loosening or dislodgement of the clip from the shaft, wherein the retainer includes a wall extending substantially perpendicular to a back plate and the step of securing the retainer to the clip comprises receiving the clip within a space defined within the wall, and characterized in that the step of securing the retainer to the clip comprises bending a portion of the wall radially inward over a portion of the clip to form a flange, the flange providing a non-tampering function.

These and other features disclosed herein can be best understood from the following specification and drawings, the following of which is a brief description.

### BRIEF DESCRIPTION OF THE DRAWINGS

Figure 1 is a cross-section of a shaft including an example retention assembly.
Figure 2 is a perspective view of a shaft and the example retention assembly.
Figure 3 is a plan view of an example clip.
Figure 4 is a plan view of an example retainer.
Figure 5 is a side view of the example retainer shown in Figure 4.
Figure 6 is a cross-section of another shaft including another example retention assembly.
Figure 7 is a perspective view of the example retention assembly shown in Figure 6.
Figure 8 is a plan view of the example retention assembly shown in Figure 6.
Figure 9A is a cross-section of the example retainer shown in Figure 8.
Figure 9B is a plan view of another example retainer.
Figure 10 is a plan view of another example retainer.
Figure 11 is a cross-section of another example retainer.
Figure 12 is a plan view of the example retainer shown in Figure 11.

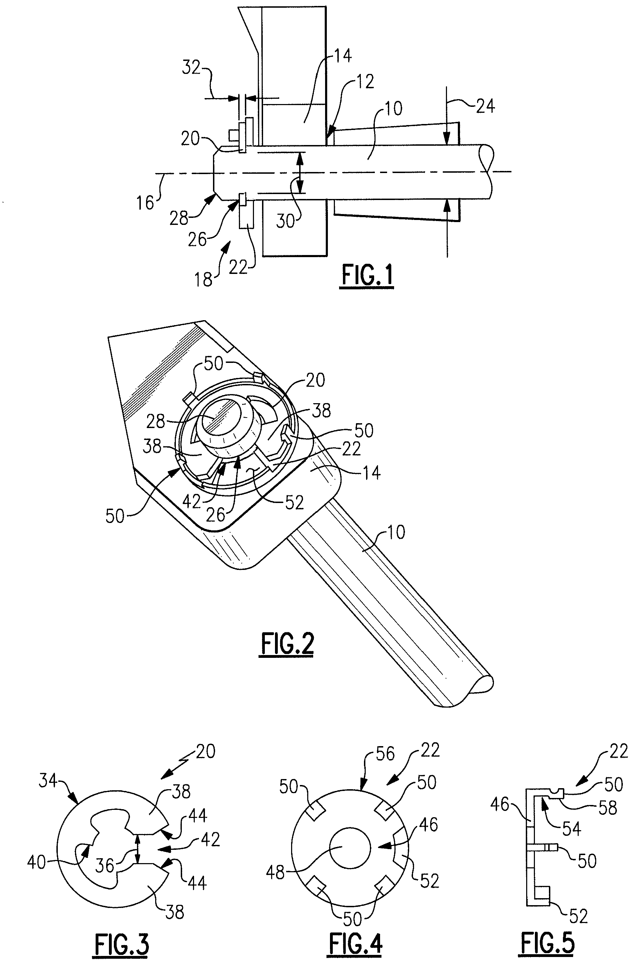

Figures 2 and 4-9B do not show embodiments of the claimed invention.

### DETAILED DESCRIPTION

Referring to Figures 1 and 2, a shaft 10 extends through an opening 12 in a support structure 14 and is constrained from movement back through the opening 12 along an axis 16 by a retention assembly 18. The example retention assembly 18 includes a clip 20 and a retainer 22 that is secured to the clip 20. The shaft 10 includes an outer diameter 24 and a groove 26 near an end 28 of the shaft 10 that receives a portion of the clip 20. The groove 26 includes a diameter 30 less then the outer diameter 24 and a width along the axis 16 that corresponds with a thickness 32 of the clip 20.

Referring to Figure 3 with continued reference to Figures 1 and 2, the example clip is an E-shaped clip that includes an outer perimeter 34 an inner space 36 defined between opposing arms 38 and a back tab 40. The opposing arms 38 are biased inward such that once received in the groove 26 of the shaft 10, they exert a biasing force that holds the clip 20 to the shaft 10 and resists spreading. The arms 38 of the clip 20 are spaced apart from each other to define an open end 42. The open end 42 provides for assembly of the clip 20 to the shaft 10. The arms 38 of the clip 20 include a tapered portion 44 on either side of the open end 42 that provides lead-in surfaces for assembly to the shaft groove 26. The tapered portions 44 cause the arms 38 to spread until the clip 20 is assembled to a desired assembled position on the shaft 10.

Removal of the clip 20 is accomplished by applying radial force to the arms 38 of the clip 20. This radially directed force causes the arms 38 to spread and release from the shaft 10. The application of force to remove the clip 20 is not always deliberate, but the resulting outcome may result in the removal or loosening of the clip 20 from the shaft.

Referring to Figures 4 and 5, which do not show an embodiment of the invention, with continued reference to Figures 1 and 2, the example retention assembly 18 includes the retainer 22 that attaches to the clip 20. The retainer 22 prevents the errant application of force to loosen the clip 20 from the shaft 10. The retainer 22 blocks the application of force on the clip 20 and thereby prevents non-deliberate loosening and removal of the clip 20.

The retainer 22 includes a back plate 46 having an opening 48 for the shaft 10. The opening 48 is a relatively close fit with the shaft 10 such that an application of force on the retainer 22 does not result in excessive radial movement. The retainer 22 further includes a fastener for attaching to the clip. The example fastener comprises a plurality of tabs 50 that cooperate to snap onto the outer surface 34 of the clip 20. The example retainer 22 includes four tabs 50 spaced circumferentially apart an equal distance from each other.

The example retainer 22 is fabricated from a metal material such as steel, aluminum, tin or other materials that provide the rigidity and compatibility with other materials such as the clip 20 and the shaft 10. Moreover, the retainer 22 is fabricated from a metal material that is compatible with the environment in which it is located. Further, although the example disclosed retainers are fabricated from a metal material, other materials such as plastic are also within the contemplation and scope of this disclosure.

An alignment member 52 engages the open end 42 between the arms 38. Engagement of the alignment member 52 with the open end 42 provides rotational alignment of the retainer 22 relative to the clip 20 such that the tabs 50 are aligned in a desired location. The alignment member 52 provides alignment such that each of the tabs 50 engages the outer surface 34 of the clip 20 and do not fall within the open end 42 of the clip 20. As appreciated, although four tabs 50 are shown by way of example, the number of tabs and the position of those tabs can vary to tailor the retainer 22 to another clip shape or to meet application specific requirements.

Each of the tabs 50 includes a notch 54 for receiving the clip 20 and locking the retainer 22 to the clip 20. The notch 54 is defined adjacent the back plate 46 and between a bump 58 and the back plate such that the clip 20 seats flat against the back plate 46. The outer diameter 56 of the back plate 46 is larger than the outer surface 34 of the clip 20. Because the back plate 46, and thereby the retainer 22 is larger than the clip 20, any force transverse that to the axis 16 is exerted on the retainer 22 and not the clip 20. Moreover, because the opening 48 in the back plate 46 is a close fit with the outer diameter 24 of the shaft 10, that force is directed through the retainer 22 to the shaft 20. This direction of radial forces around the clip 20 prevents errant forces from being encountered by the clip 20.

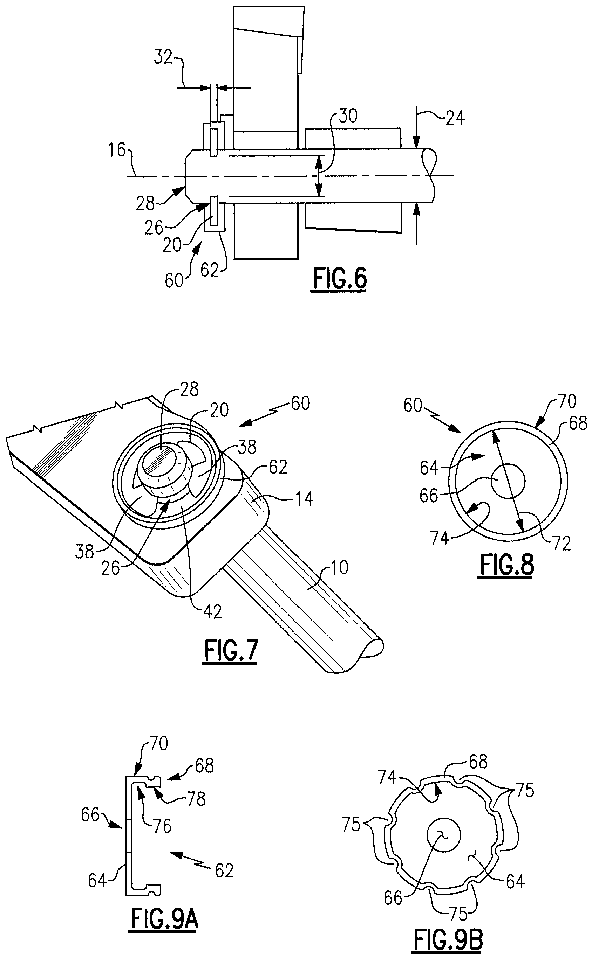

Referring to Figures 6, 7, 8, 9A, and 9B, which do not show embodiments of the invention, another retention assembly 60 includes another example retainer 62. The example retainer 62 includes a back plate 64 and opening 66 that fits closely onto the shaft 10. A wall 68 extends perpendicular from the back plate 64 and extends continuously about an outer perimeter 70 of the back plate 64. The clip 20 is received within an inner diameter 72 defined by the wall 68.

The wall 68 includes an inner surface 74 that defines a groove 76 for receiving and securing the clip 20. The groove 76 is defined between the back plate 64 and a bump 78 spaced from the back plate 64 on the inner surface 74. The clip 20 snap fits over the bump 78 and into the groove 76.

The wall 68 may also include a plurality of indentations 75 that extend radially inward at discrete locations about the inner surface 74. The indentations 75 overlap the clip 20 to hold the retainer 62 to the clip 20 (Figure 9B).

Once the clip 20 is received within the groove 76, the retainer 62 is secured to the clip 20 and will remain with the clip 20. Because the retainer 62 is fastened to the clip 20, movement of the shaft 10 does not change a relative position between the retainer 62 and the clip 20. Moreover, the function and operation of the retainer 62 is not adversely affected by a change in relative position of the shaft 10. No other structure or support is required to maintain the relative position of the retainer 62 to the clip 20. Additionally, tolerances of the shaft 10 relative to the support 14 do not need to be adjusted to facilitate operation of the example retention assembly 60.

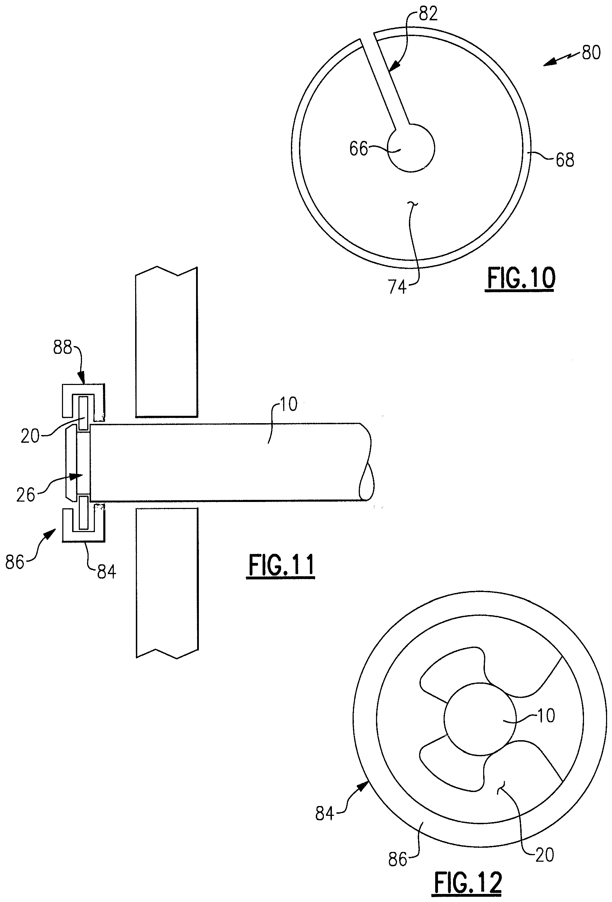

Referring to Figure 10, which shows an embodiment of the invention, another example retainer 80 includes a split 82 that extends radially outward from the opening 66 for the shaft 10 (not shown here). The split 82 provides radial flexibility to the retainer 80 to provide some opening movement as the retainer 80 is assembled to the clip 20. The wall 68 therefore does not continue about the entire circumference. The split 82 provides flexibility to not only provide for assembly to the clip 20 but also can be utilized for assembly to the shaft 10. For example retainer 80 may be bent apart axially at the split 82 to provide for twisting assembly to the shaft 10.

In this example the retainer 80 is fabricated from a metal material such as steel, aluminum or a composite metal material that is compatible with application specific requirements. The split 82 provides the limited flexibility desired to provide installation and securement to the clip 20.

Referring to Figures 11 and 12, which show an embodiment of the invention, another example retainer 84 includes a flange 86 that is bent over the clip 20 to hold the retainer 84 to the clip 20. The example retainer 84 includes the wall 88 that extends past the clip 20 and includes an additional length that is then bent over the clip 20 to form the flange 86. The bent over portion that forms the flange 86 provides the desired securement of the retainer 84 to the clip 20. Moreover, the bent over flange 86 provides a non-tampering function, in that removal of the retainer 84 requires some level of destruction, thereby requiring the installation of a new retainer 84. This feature provides the desired function of requiring that a new retainer 84 be installed upon each removal of the clip 20. Moreover, the configuration of the retainer 84 discourages disassembly by those not desired to perform such steps.

Accordingly, the disclosed example retainers 22, 62, 80, and 84 prevent undesired dislodging of the clips 20 without adjusting tolerances or adding additional support structures. Moreover, the example retainers 22, 62, 80, and 84 are not required to be adjusted depending on shaft length or distance between an end of the shaft 10 and support structure 14. The retainers 22, 62, 80, and 84 can employ a variety of fastening structures, such as tabs 50, alignment member 52, notch 54, walls 68 and 88, and flange 86.

Although an example embodiment has been disclosed, a worker of ordinary skill in this art would recognize that certain modifications would come within the scope of this disclosure. For that reason, the following claims should be studied to determine the scope and content of this invention.

## Claims

1. A shaft retention assembly (18) comprising:
a clip (20) having an open end (42) and opposing arms (38) for engaging a shaft (10);
a retainer (22) including a fastening structure configured to secure the retainer to the clip and to prevent errant loosening or dislodgement of the clip from a shaft, wherein:
the retainer comprises a back plate including an opening (66) for the shaft and the fastening structure extends from the back plate,
the back plate comprises an outer perimeter larger than an outer perimeter (34) of the clip,
the fastening structure comprises a wall (88) surrounding the outer perimeter of the clip, the wall extending past the clip and including an additional length beyond the clip, **characterised by** the additional length being formable radially inward to form a flange (86) to secure to the clip, the flange providing a non-tampering function.

2. The shaft retention assembly as recited in claim 1, including a split (82) extending radially from the opening for the shaft to an outer periphery of the retainer clip.

3. The shaft retention assembly as recited in claim 1 or 2, wherein the clip includes a back tab (40) disposed opposite the open end.

4. The shaft retention assembly as recited in claim 1, 2 or 3, wherein the flange provides a non-tampering function, in that removal of the retainer requires some level of destruction, thereby requiring the installation of a new retainer.

5. A method of securing a clip (20) to a shaft (10) comprising the steps of:
assembling a retainer (84) onto an outer diameter of the shaft;
assembling the clip having an open end (42) into a groove (26) on an outer surface of the shaft; and
securing the retainer to the clip such that an outer surface of the retainer shields the open end of the clip from contact transverse to an axis of the shaft and such that the retainer prevents errant loosening or dislodgement of the clip from the shaft,
wherein the retainer includes a wall (88) extending substantially perpendicular to a back plate and the step of securing the retainer to the clip comprises receiving the clip within a space defined within the wall,
and **characterized in that** the step of securing the retainer to the clip comprises bending a portion of the wall radially inward over a portion of the clip to form a flange (86), the flange providing a non-tampering function.

6. The method as recited in claim 5, wherein the retainer includes an opening that closely fits the outer diameter of the shaft.

7. The method as recited in claim 5 or 6, wherein the retainer includes a split (82) extending radially outward to an outer periphery of the wall and the step of securing the retainer to the clip comprises bending the retainer outward at the split to receive the clip.

## Patentansprüche

1. Wellenhalteanordnung (18), umfassend:
einen Clip (20), der ein offenes Ende (42) und gegenüberliegende Arme (38), um mit einer Welle (10) in Eingriff zu gelangen, aufweist;
eine Halterung (22), die eine Befestigungsstruktur umfasst, die konfiguriert ist, um die Halterung am Clip zu fixieren und um eine fehlgeleitete Lockerung oder Ablösung des Clips von einer Welle zu verhindern, wobei:
die Halterung eine Stützplatte umfasst, die eine Öffnung (66) für die Welle umfasst, und wobei die Befestigungsstruktur sich von der Stützplatte erstreckt;
die Stützplatte einen äußeren Umfang umfasst, der größer ist als ein äußerer Umfang (34) des Clips,
die Befestigungsstruktur eine Wand (88) umfasst, die den äußeren Umfang des Clips umgibt,
wobei sich die Wand über den Clip hinaus erstreckt und eine zusätzliche Länge über den Clip hinaus umfasst, **dadurch gekennzeichnet, dass** die zusätzliche Länge radial nach innen verformbar ist, um einen Flansch (86) zu bilden, der am Clip fixiert werden kann, wobei der Flansch eine Manipulationsschutzfunktion bietet.

2. Wellenhalteanordnung nach Anspruch 1, umfassend einen Spalt (82), der radial von der Öffnung für die Welle zu einem äußeren Umfang des Halteclips verläuft.

3. Wellenhalteanordnung nach Anspruch 1 oder 2, wobei der Clip einen hinteren Riegel (40), der gegenüber dem offenen Ende angeordnet ist, umfasst.

4. Wellenhalteanordnung nach Anspruch 1, 2 oder 3, wobei der Flansch eine Manipulationsschutzfunktion bietet, indem die Entfernung der Halterung einen gewissen Grad der Zerstörung erforderlich macht, wodurch das Anbringen einer neuen Halterung erforderlich wird.

5. Verfahren zum Befestigen eines Clips (20) an einer Welle (10), umfassend folgende Schritte:
Montieren einer Halterung (84) an einem äußeren Durchmesser der Welle;
Montieren des Clips, der ein offenes Ende (42) aufweist, in einer Rille (26) an einer äußeren Fläche der Welle; und
Befestigen der Halterung an dem Clip derart, dass eine äußere Fläche der Halterung das offene Ende des Clips vor Kontakt quer zu einer Achse der Welle schützt und so dass die Halterung eine fehlgeleitete Lockerung oder Ablösung des Clips von der Welle verhindert,
wobei die Halterung eine Wand (88) umfasst, die im Wesentlichen senkrecht zu einer Stützplatte verläuft, und der Schritt des Befestigens der Halterung am Clip das Aufnehmen des Clips innerhalb eines innerhalb der Wand abgegrenzten Raums umfasst,
und **dadurch gekennzeichnet, dass** der Schritt des Befestigens der Halterung am Clip das Biegen eines Abschnitts der Wand radial nach innen über einen Abschnitt des Clips zum Bilden eines Flansches (86) umfasst, wobei der Flansch eine Manipulationsschutzfunktion bietet.

6. Verfahren nach Anspruch 5, wobei die Halterung eine Öffnung umfasst, die eng am äußeren Durchmesser der Welle anliegt.

7. Verfahren nach Anspruch 5 oder 6, wobei die Halterung einen Spalt (82) umfasst, der radial nach außen zu einem äußeren Umfang der Wand verläuft und der Schritt des Befestigens der Halterung am Clip das Biegen der Halterung nach außen am Spalt, um den Clip aufzunehmen, umfasst.

## Revendications

1. Ensemble de retenue d'arbre (18) comprenant :
un clip (20) présentant une extrémité ouverte (42) et des bras opposés (38) pour mettre en prise un arbre (10) ;
une pièce de retenue (22) incluant une structure de fixation configurée pour fixer la pièce de retenue au clip et pour empêcher le détachement ou le délogement erratique du clip d'un arbre, dans lequel :
la pièce de retenue comprend une plaque arrière incluant une ouverture (66) pour l'arbre et la structure de fixation s'étend depuis la plaque arrière,
la plaque arrière comprend un périmètre extérieur supérieur à un périmètre extérieur (34) du clip,
la structure de fixation comprend une paroi (88) entourant le périmètre extérieur du clip,
la paroi s'étendant après le clip et incluant une longueur supplémentaire au-delà du clip, **caractérisé par** la longueur supplémentaire qui peut être formée radialement vers l'intérieur pour former une bride (86) pour la fixation au clip, la bride assurant une fonction de non-altération.

2. Ensemble de retenue d'arbre selon la revendication 1, incluant une fente (82) s'étendant radialement depuis l'ouverture pour l'arbre à une périphérie extérieure du clip de pièce de retenue.

3. Ensemble de retenue d'arbre selon la revendication 1 ou 2, dans lequel le clip inclut une patte arrière (40) disposée à l'opposé de l'extrémité ouverte.

4. Ensemble de retenue d'arbre selon la revendication 1, 2 ou 3, dans lequel la bride fournit une fonction de non-altération, en ce que le retrait de la pièce de retenue requiert un certain niveau de destruction, requérant ainsi l'installation d'une nouvelle pièce de retenue.

5. Procédé de fixation d'un clip (20) à un arbre (10) comprenant les étapes de :
l'assemblage d'une pièce de retenue (84) sur un diamètre extérieur de l'arbre ;
l'assemblage du clip présentant une extrémité ouverte (42) dans une rainure (26) sur une surface extérieure de l'arbre ; et
la fixation de la pièce de retenue au clip de sorte qu'une surface extérieure de la pièce de retenue blinde l'extrémité ouverte du clip du contact transversal à un axe de l'arbre et de sorte que la pièce de retenue empêche le détachement ou le délogement erratique du clip de l'arbre,
dans lequel la pièce de retenue inclut une paroi (88) s'étendant sensiblement perpendiculairement à une plaque arrière et l'étape de fixation de la pièce de retenue au clip comprend la réception du clip dans un espace défini dans la paroi,
et **caractérisé en ce que** l'étape de fixation de la pièce de retenue au clip comprend le pliage d'une portion de la paroi radialement vers l'intérieur sur une portion du clip pour former une bride (86), la bride assurant une fonction de non-altération.

6. Procédé selon la revendication 5, dans lequel la pièce de retenue inclut une ouverture qui s'ajuste étroitement au diamètre extérieur de l'arbre.

7. Procédé selon la revendication 5 ou 6, dans lequel la pièce de retenue inclut une fente (82) s'étendant radialement vers l'extérieur vers une périphérie extérieure de la paroi et l'étape de fixation de la pièce de retenue au clip comprend le pliage de la pièce de retenue vers l'extérieur sur la fente pour recevoir le clip.
